# EUROPEAN PATENT APPLICATION

(11) **EP 2 275 982 A1**
(43) Date of publication of application: **19.01.2011**
(21) Application number: 09010593.3
(22) Date of filing: 18.08.2009
(51) Int. Cl.: G06Q 20/00

(54) **Querying a user of a mobile communication device**

(30) Priority: 16.07.2009 EP 09165679
(71) Applicant: Vodafone Holding GmbH, 40213 Düsseldorf (DE)
(72) Inventor: Eschenauer, Laurent, 4102 Ougrée (BE); Weisscher, Alard, 6231 LG Meerssen (NL); Hoeksel, Sebastiaan, 6229 VN Maastricht (NL)
(74) Representative: Jostarndt, Hans-Dieter

(57) **Abstract**

The invention relates to a method for providing a question to a user of a mobile communication device (101) connected to a mobile communication network (103). The method comprises the steps of: (i) receiving a command in the mobile communication device (101) via the mobile communication network (103), the command specifying a question to be presented to the user of the mobile communication device (101), (ii) passing the command to an application of the mobile communication device (101), the application controlling the mobile communication device (101) to present the question to the user within a standard graphical environment provided by the mobile communication device (101), (iii) the application receiving a user input made at the mobile communication device (101) in connection with the presentation of the question, and (iv) the application instructing the mobile communication device (101) to the send an answer to the question via the mobile communication network (103), the answer corresponding to the user input. Furthermore, the invention relates to a computer program for executing the method.

## Description

The invention relates to a communication to a user of a mobile communication device. More specifically, the invention relates to methods and to a computer program for providing a question to a user of a mobile communication device connected to a mobite communication network. Furthermore, the inventions relates to a broker unit for providing a question to a user of a mobile communication device connected to a mobile communication network.

Within the scope of certain services provided to a user of a mobile communication device, the service provider may want to ask a question to the user, when certain action provided by the service is to be executed on behalf of the user. The question may include a query for a confirmation for executing the action or for selecting an action among several possible actions. The service may be invoked using the mobile communication device. For instance, this may be done by reading certain tag by means of a mobile communication device. Likewise, the service may be invoked in another way and the mobile communication device may be used in the service as a means for communicating with its user.

If it is necessary or preferred to execute the action in a specific point in time, it is advantageous that the service provider can ask the question to the user at its own initiative. In order to contact the user via the mobile communication device, the service provider can make a call, particularly a voice or video call, to pose a question to the user. As an alternative, the service provider may send a message comprising the relevant question to the user, and the user may answer the message by sending a response message to the service provider. For instance, the message may be a SMS message, an MMS message, or an e-mail (SMS:
Short Message Service, MMS: Multimedia Messaging Service). A further possibility to communicate with the user is a WAP push command instructing the mobile communication device to open a webpage provided by the service provider (WAP: Wireless Application Protocol). The webpage may comprise the question to the user and may allow the user to input his answer.

The aforementioned options for communicating with a user of a mobile communication device all have disadvantages for the user. A call may disturb the user and may be regarded as intrusive. Generating and sending a reply to a received message is cumbersome for the user of the mobile communication device. And, opening a webpage via a mobile communication network using the mobile communication device often is quite time-consuming and requires access to the Internet, which may not be activated at the mobile communication device.

Therefore, it is an object of the present invention to provide a question to the user of a mobile communication device over a mobile communication network to which the mobile communication device is connected in a more user-convenient way.

The object is achieved by a method according to claim 1 and by a computer program according to claim 11. Embodiments of the method and the computer program are given in the dependent claims.

According to a first aspect, the invention suggests a method for providing a question to a user of a mobile communication device connected to a mobile communication network. The method comprises the following steps:
- receiving a command in the mobile communication device via the mobile communication network, the command specifying a question to be presented to the user of the mobile communication device,
- passing the command to an application of the mobile communication device, the application controlling the mobile communication device to present the question to the user within a standard graphical environment provided by the mobile communication device,
- the application receiving a user input made at the mobile communication device in connection with the presentation of the question,
- the application instructing the mobile communication device to the send an answer to the question via the mobile communication network, the answer corresponding to the user input.

According to a second aspect, the invention provides a computer program for being executed in a mobile communication device connected to a mobile communication network. The computer program is adapted to receive a command, the command specifying a question to be presented to the user of the mobile communication device. Furthermore, the computer program is configured to control the mobile communication device to present the question to the user within a standard graphical environment provided by the mobile communication device, to receive a user input made at the mobile communication device in connection with the presentation of the question, and to instruct the mobile communication device to the send an answer to the question via the mobile communication network, the answer corresponding to the user input. The computer program corresponds to the application mentioned before.

The invention involves the idea to provide an application or computer program in the mobile communication of a user, that present the question to the user at the mobile communication device. Advantageously, the question is presented within a standard graphical user environment of the mobile communication, so that the question is presented using the usual "look and feel" of the mobile communication device.

A standard graphical environment of the mobile communication device is to be understood as a graphical environment uses for presenting the graphical user interface for controlling the operation of the mobile communication device. In particular, in the graphical environment menus are presented for invoking functionalities of the mobile communication device and for managing data stored in the mobile communication device. The standard graphical user environment may be provided by the operating system of the mobile communication device.

It is a further advantage of the invention that the application instructs the mobile communication device to send the answer to the question upon having receipt the user input corresponding to the answer. Thus, the user does not have to generate a message comprising the answer and to control the transmission of the message.

Moreover, the application advantageously controls the presentation of the question and the transmission of the answer proactively, i.e. on its own initiative. Thus, the user does only have to enter the answer to the question. Furthermore, the command is preferably transparently forwarded to the application within the mobile communication device. Thus, the receipt and forwarding of the command in the mobile communication device is hidden from the user of the device, and no user interaction is required to provide the command to the application. In addition, the answer is preferably transmitted transparently via the communication network, in particular without any user interaction.

In one embodiment of the invention, the application is executed in a user identification module removably connected to the mobile communication device. In particular, the user identification module may be included in a so-called smartcard, which may be inserted into the mobile communication device. The user identification module provides resources, such as services and/or data, for identifying and/or authenticating a user of a mobile communication device in the mobile communication network. For instance, if the mobile communication network is configured as a GSM network (GSM: Global System for Mobile Communications), the user identification module may be configured as a SIM (SIM: Subscriber Identification Module) according to the GSM specification. If the mobile communication network is configured as a UMTS network (UMTS: Universal Mobile Telecommunications System), the user identification module may be configured as a USIM (Universal Subscriber identification Module) according to the UMTS specification. Providing the application in the user identification module has the advantage that the application may be preinstalled by the issuer of the user identification module, which usually is the mobile network operator of the mobile communication network.

One embodiment of the invention provides that the application uses a card application toolkit, particularly a SIM application toolkit or a USIM application toolkit. Advantageously card application toolkits are usually implemented in identification modules used in mobile communications, and they provide functionality, which can be used to present a question to the user of the mobile communication device, to receive the answer of the user and to transmit the answer to the broker unit. In general, a card application toolkit (CAT) is to be understood as a set of applications and related procedures that may be used during a card session. In particular, the CAT provides mechanisms which allow applications, existing in an identification module, to interact and operate with a mobile terminal of a mobile communication device, which supports the specific mechanism required by the application. A card application toolkit of such type is described in the ETSI document TS 102 223. The term mobile terminal designates the parts of the mobile communication device except the identification module.

In a further embodiment of invention, the command and/or the answer is sent via the mobile communication network using a messaging service provided by the mobile communication network, particularly using a Short Message Service (SMS). One advantage of using the SMS is that a mobile communication device usually provides a mechanism for transparently forwarding SMS messages to predetermined applications and that a CAT usually includes functionality allowing the identification module to send SMS messages on its own initiative.

Furthermore, in one embodiment, the command specifies at least two predetermined answers to the questions, the application presenting the predetermined answer in the graphical environment and the application interpreting the input of the user as a selection of one predetermined answer. The presentation of answers facilitates responding to the question.

In one embodiment of the invention, an application unit transmits an instruction including the question to a broker unit with the mobile communication network, the broker generating the command and transmitting the command to the mobile communication device via the mobile communication network. In this embodiment, an application unit, which may be operated by a service provider providing a service to the user of the mobile communication network, does not communicate with the mobile communication device of the user directly but via the broker unit, which generates the command to be sent to the mobile communication device. In particular the broker unit may adapt the command to the application of the mobile communication device. It is an advantage of this architecture that the instruction sent from the application unit does not have to be adapted to the application. Thus, the service provider does not have to take the design of the application into consideration.

The broker unit and the application unit may be configured as network servers. The server corresponding to the broker unit is preferably connected to the mobile communication network to which the mobile communication device is connected. This enables the broker unit to communicate with the mobile communication device via the mobile communication network. Both servers are preferably connected to each other via a data network, such as, for example, the Internet.

Preferably the answer to the question is also provided to the application unit via the broker unit. Therefore, in one embodiment of the invention, wherein the application controls the mobile communication device to send a message comprising the answer to the broker unit, the broker unit forwarding the answer to the application unit

Furthermore, in one embodiment of the invention, the instructions comprise an address of the mobile communication device, the broker unit using the address for addressing the command to the mobile communication device. As common in mobile communications, the address may be a Mobile Subscriber Integrated Services Digital Network Number (MSISDN). The address of the mobile communication device may be included in the instruction, if the application unit has knowledge of the address. This knowledge may be due to a foregoing registration of the user of the mobile communication device in the application unit.

In an alternative embodiment of the invention, the instruction comprises an identification code of the mobile communication device, the broker unit determining the address of the mobile communication device using an allocation between the identification code and the address, the determined address being used for addressing the command to the mobile communication device. It is an advantage of this embodiment that the application unit does not have to dispose of the address of the mobile communication device of the user. The identification code may be a user name under which the user is registered in the application unit. Alternatively, the allocation between the identification code and the address may be generated in the broker server and the broker server may communicate the identification code to the application unit. In this case the allocation may optionally be temporary. In general the use of an identification code for identifying the user in the application unit allows a user to anonymously access the service provided by the application unit.

In a further embodiment of the invention, the broker unit determines an identification code allocated to the mobile communication device when receiving the answer to the question from the mobile communication device, and the broker unit forwards the answer to the application unit together with the identification code. Advantageously, this allows the application unit to determine the user that sent the answer to the question based on an identification code under which the user is registered in the application unit.

According to a further aspect, the invention provides an identification module for use in a mobile communication device that comprises a computer program of the type described before. As described before, the computer program is adapted to use a card application toolkit, particularly a SIM application toolkit or a USIM application toolkit, for controlling the mobile communication device.

Furthermore, the invention suggests a mobile communication device comprising a computer program of the aforementioned type and/or an identification module of the type described before.

According to a further aspect, the invention provides a broker unit for providing a question to a user of a mobile communication device connected to a mobile communication network, the broker unit being connectable to the mobile communication network and the broker unit being adapted to generate and to transmit to the mobile communication device a command for instructing an application of the mobile communication device to present the question to the user, and the broker unit being further adapted to receive from the mobile communication device an answer to the question, the broker unit being further adapted to generate the command in response to an instruction sent from an application unit to the broker unit.

Moreover, according to one aspect of the invention, a method for providing a question to a user of a mobile communication device connected to a mobile communication network is suggested. The method comprises the steps of:
- connecting a broker unit to a mobile communication network,
- receiving in the broker unit an instruction from an application unit, the instruction specifying a question,
- in response to a receipt of the command, generating in the broker unit a command for instructing an application of the mobile communication device to present the question to the user,
- sending the command from the broker unit to the mobile communication device, and
- receiving in the broker unit an answer to the question from the mobile communication device.

As described before, the broker server advantageously transmits the question to the mobile communication device and the application unit, which may be operated by a service provider providing a service to the user of the mobile communication network, does not communicate with the mobile communication device of the user directly but via the broker unit. In this architecture, the instruction sent from the application unit does not have to be adapted to the mobile communication device and the mobile communication device does not have to be configured in a special way for communicating with the application unit. The broker unit may adapt the command to the application of the mobile communication device as described before.

Furthermore, in one embodiment of the method, the broker unit transmits to the application unit the response to the question received from the mobile communication device, and, in one embodiment of the invention, the broker unit is further adapted to transmit to the application unit the response to the question received from the mobile communication device. In this embodiments, the broker unit advantageously also provides the answer of the user of the mobile communication device to the application unit.

The aforementioned and other aspects of the invention will also be apparent from and elucidated with reference to the embodiments described hereinafter making reference to the drawings.

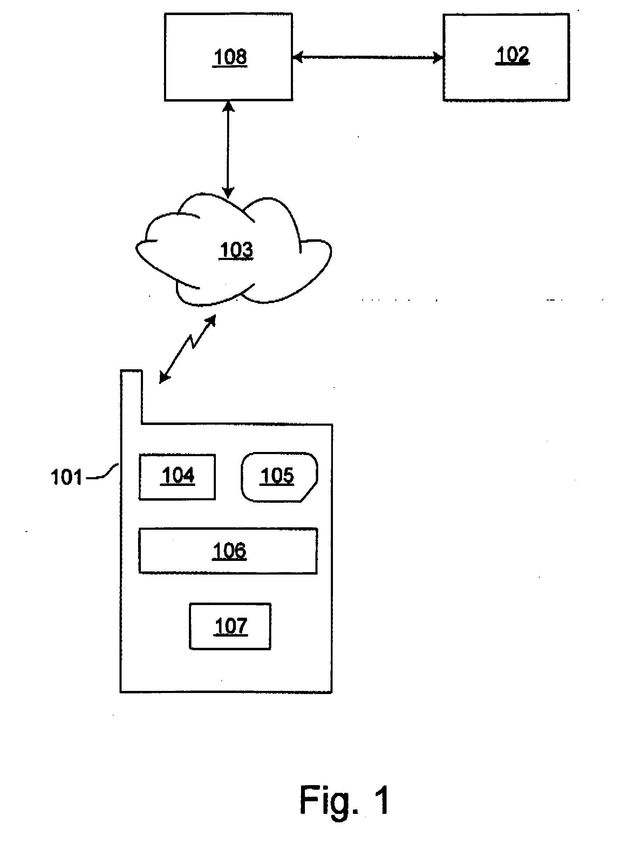

Reference will be made by way of example to the accompanying drawings in which
- Fig. 1: shows a schematic block diagram of a system for communicating with user of a mobile communication device.

In the system schematically shown in figure 1, providers of services can ask as questions the users of mobile communication devices 101 and receive the answers given by the users of the mobile communication devices 101. For this purpose, each service provider may operate an application server 102, which initiates the query of a user of a mobile communication device 101 and which receives the response of the user. Although a plurality of mobile communication devices 101 and several application servers 102 can be operated in the system, by way of example only one mobile communication device 101 and one application server 102 is depicted in figure 1.

In principle, the question asked to the user of the mobile communication device 101 by the application server 102 may be any question of interest in connection with a service. For instance, the application server 102 may ask the user of the mobile communication device 101 to confirm an execution of an action to be carried out or initiated by the application server 102 on behalf of the user, or the application server 102 may ask the user of the mobile communication device 101 to choose one of several options or actions provided in connection with the service.

A service may provide that a query is sent to a user of a mobile communication device 101 essentially immediately after a service request has been received in an application server 102. The service request may be sent from the mobile communication device 101 to the application server 102, or the user may communicate with the application server 102 via another channel to send the service request to the application server 102. In an exemplary embodiment, the service is a tag-based service in which a user reads a tag using the mobile communication device 101 and an application server 102 executes certain action after it has been notified of the reading of the tag. The tag may be a data carrier that can be read in by means of the mobile communication device. In particular, the tag may be a barcode or contactless data carrier, such as, for example, a NFC tag (NFC: Near Field Communication). Such a tag-based service may be a location-related service where a tag is provided at certain location or control point so that it can be determined that a mobile communication device 101 or its user is located at certain position or passes certain point, when the tag is read. For instance, such tags may be provided at entrances or exits of buildings or other facilities allowing determining that a user of a mobile communication device 101 enters or leaves the building or facility, when a tag is read. In addition or as an alternative, using a tag-based service, a service user may receive information on products or services, order products or services or may perform certain transactions, such as financial transactions, for example. Tags for accessing such services may be provided in advertisements or on products.. For instance, the user of the mobile communication device 101 may retrieve information on a product or order a product by reading the attached tag. Within the scope of a tag-based service, the question may relate to an accounting process for charging the user for using the service, for example. Here, the application server 102 may query the user to confirm an accounting process or to provide details for accounting.

Furthermore, it may be possible that the user of the mobile communication device 101 has subscribed to a service and within the scope of the service, the application server 102 asks a question to the user on the initiative of the application sever 102. For instance, the service provides a management of a stock portfolio of the user of the mobile communication device 101 and the application server 102 asks the user whether stocks are to be bought and/or sold or which stocks are to be bought and/or sold.

The mobile communication device 101, which is used for accessing the service provided by the application server 102, can be connected wirelessly to a mobile communication network 103. For this purpose, the mobile communication device 101 comprises a radio module 104, which is configured according to the type of the mobile communication network 103. The mobile communication network comprises a circuit-switched part and may also comprise a packet-switched part. The mobile communication network 103 may be a GSM or a UMTS network, for example (GSM: Global System for Mobile Communications, UMTS: Universal Mobile Telecommunications System). Likewise, the mobile communication network 103 may be configured according to a different mobile communication standard.

For interacting with the user, the mobile communication device 101 includes a user interface 106, which may comprise a display unit and an input unit, such as, for example, a keyboard. The operation of the mobile communication device 101 is particularly controlled by a processor unit 107. The processor unit 107 interfaces with the components of the mobile communication device 101, in particular with the radio module 104 and the user interface 106 and also with an identification module 105, and allows for executing applications providing certain functionalities of the mobile communication device 101. In one embodiment, the mobile communication device 101 is a portable handheld device, such as a cellular phone, a PDA (Personal Data Assistant) or the like. Such devices may also be equipped with suitable interfaces for reading tags so that tag-based services can be accessed using the devices. Moreover, the user of a device of the aforementioned type usually has his device at his disposal in many situations and does not need to carry a further device for accessing a service and responding to questions of a service provider. Thus, in view of questions which are asked on the initiative of the service provider, there is a high probability for reaching the user, when a question is asked and answered at a mobile communication device 101 of the aforementioned type.

In the mobile communication device 101, the radio module 104 is connected to an identification module 105, which provides applications and data for identifying and authenticating the mobile communication device 101 in the mobile communication network 103. The application may be configured as a SIM application, if the mobile communication network 103 is GSM network, and the application may be configured as a USIM application, if the mobile communication network 103 is a UMTS network. As common in mobile communications, the identification module 105 is configured as a so-called smartcard or integrated circuit card, which is removably inserted into the mobile communication device 101. In particular, the smartcard may be a UICC (Universal Integrated Chip Card), i.e. a smartcard that is adapted for use in mobile communications. The identification module 105 comprises a microcontroller that executes the aforementioned identification and/or authentication application and allows for executing further applications, which are installed in the identification module 105.

In order to allow applications executed in the identification module 105 to interact and operate with other components of the mobile communication device 101, the identification module 105 preferably provides a suitable mechanism. In particular, the mechanism may allow applications executed in the identification module 105 to play an active role in the controlling of the mobile communication device 101. For instance, the mechanisms may enable applications of the identification module 105 to present outputs on the display unit of the user interface 106, to receive user inputs entered using the user interface 106 as well as to receive and send messages via the radio module 104 of the mobile communication device 101. The mechanism may be included in a card application toolkit (CAT) as described in the ETSI document TS 102 223. If the identification module 105 is configured according the GSM standard the CAT may be the SIM application toolkit (SAT) particularly specified in the 3GPP document TS 51.014. If the identification module 105 is a UICC comprising a USAT application according to the UMTS standard, the CAT may be the USIM application toolkit (USAT) particularly specified in the 3GPP document TS 31.111.

In following, an embodiment of the invention is described in which the application server 102 communicates with the mobile communication device 101 via a broker server 108. However, it is likewise possible that the application server communicates directly with the mobile communication device 101 similarly as described hereinafter for the broker server 108.

The broker server 108 forwards a question generated in an application server 102 to a mobile communication device 101, and it forwards the response of the user of the mobile communication device 101 to the application server 102. The application server 102 may be connected to the broker server 108 via a network, which is not shown in figure 1, and the application server 102 may access the broker server 108 using a suitable API (Application Programming Interface).

In one embodiment, an application server 102 has to be registered in the broker server 108 in order to be able to use functionalities of the broker server 108. The registration may also be used to charge a service provider operating an application server 102 for using functionalities of the broker server 108. The registered application servers 102 may be managed in the broker server 108 and may be identified and/or authenticated, when they access the broker server 108.

When an application server 102 decides to ask a question to a user of a mobile communication device 101, the application server 102 sends the question to the broker server 108 via the respective interface of the broker server 108. For this purpose, the application server 102 may send to the broker server 108 a message comprising the text of the question. In addition, the broker server 108 may verify the identity and/or authenticity of the application server 102. If the verification is successful, the broker server 108 processes the question. Otherwise, access to the broker server 108 is not allowed for the application server 102. In addition to the question, the application server 102 may provide two or more possible answers to the question from which the user of the mobile communication device 101 can choose his response to the question. If the question is a yes-no question, the possible answers from which the user of the mobile communication device 101 can choose may be "yes" and "no". If a question is a wh-question, possible answers can also be provided by the application server 102. The answers provided by the application server 102 may be sent to the broker server 108 together with the question. In particular, the answers may be included in the message comprising in the question.

When the application server 102 passes the question to the broker server 108, it also specifies the mobile communication device 101 to which the question is to be sent. For this purpose, the application server 102 may specify an address under which the mobile communication device 101 is registered in the mobile communication network 103. This address may be used by the broker server 108 to communicate with the mobile communication device 101. In one embodiment, the address may be an MSISDN, which is allocated to the mobile communication device 101 or its identification module 105 in the mobile communication network 103.

In an alternative embodiment, the broker server 108 comprises allocations between addresses of mobile communication devices 101 reachable via the broker server 108 and identification codes, such as, for example, user names. In this embodiment, the application server 102 may specify the identification code when sending a question to the broker server 108. Then, the broker server 108 determines the address of the mobile communication device 101 using the allocation stored in the broker server 108 for the relevant mobile communication device 101. For generating the allocations, the mobile communication devices 101 are registered in the broker server 108.

To a mobile communication device 101 one identification code may be allocated in the broker server 108. This identification code may be used to identify the mobile communication device 101 or its user in any application server 102 connected to the broker server 108. Likewise, different identification codes may be allocated to one mobile communication device 101 for different application servers 102. For this purpose, for one or more application servers 102 registered in the broker server 108 an allocation between the address of a mobile communication device 101 and an individual identification code is stored. Those application servers 102 may be the application servers 102, which provide services used by the user of the mobile communication device 101, For each application server 102, the allocation of a mobile communication device 101 to an identification code may be provided by the user of the mobile communication device 101. Thus a user that has a user account in an application server 102 may register the mobile communication device 101 in the broker server 108 under the identification code included in the account. When the broker server 108 forwards a question received from an application server 102 to a mobile communication device 101, the broker server 108 determines the allocation between the identification code and the address of the mobile communication device 101, which is valid for the application server 102 sending the question. Then, the question is forwarded to the mobile communication device 101 using the determined address.

The allocation or allocations between the address of the mobile communication device 101 and the identification code or codes may be valid permanently. If a service provided by an application server 102 is requested by means of a mobile communication device 101, the broker server 108 may also generate and store a temporary allocation between the mobile communication device 101 and an identification code in order to allow an application server 102 to temporarily communicate with a mobile communication device 101. For this purpose, a service request for accessing a service provided by an application server 102 may be sent from the mobile communication device 101 to the broker server 108. Then, the broker server 108 may generate an association between the address of the mobile communication device 101 and may forward the service request to the application server 102 together with the identification code. The link between the mobile communication device 101 and the identification code may be valid for a predetermined period of time or for a predetermined number of messages or questions sent from the application server 102 and forwarded to the mobile communication device 101 by the broker server 108. This allows for a communication between the application server 102 and the mobile communication device 101, while the identity of the mobile communication 101 and its user is completely hidden from the application server 102.

After having received from the application server 102 a message comprising a question and after having determined the address of the mobile communication device 101 to which the question is to be sent, the broker server 108 generates instructions for presenting the question at the mobile communication device 101 and, if applicable, for presenting answers to the questions provided by the application server 102. Preferably, the instructions comprise the text of the question to be asked. If the application server 102 provides answers to the question, the answers are also included in the instructions. After the instructions are available, they are sent to the mobile communication device 101 via the mobile communication network 103.

In the mobile communication device 101, an application interprets the instructions generated in the broker server 108. The application controls the presentation of the question and, if applicable, of possible answers, receives a user input corresponding to the answer to the question and controls the transmission of the answer to the broker server 108. The application may be executed in the processor unit 107 of the mobile communication device 101. As an alternative, the application may be stored and executed in the identification module 105. This allows a mobile network operator issuing the identification module 105 to pre-install the application in the identification module 105. Furthermore, the user can use the application in any mobile communication device 101 into which the identification module 105 is inserted.

Preferably, the application receives the instructions sent from the broker server 108 to the mobile communication device 101 without any interaction with the user of the mobile communication device 101. This means that the instructions are forwarded transparently to the application, when they are received in the mobile communication device 101 via the radio module 104. In order to achieve this, the instructions may be addressed using a so-called port number assigned to the application. For transmitting the instructions any bearer service provided in the mobile communication network 103 for sending messages may be used. For instance, the instruction can be send via the SMS, particularly as a binary SMS. If the mobile communication device 101 is connected to the packet switched part of the mobile communication network 103, the instruction may also be send via an IP connection between the broker server 108 and the mobile communication device 101 using a push message.

After having received the instructions, the application determines the question, which is to be asked to the user of the mobile communication device 101 and presents the question at the display unit included in the user interface 106 of the mobile communication device 101. Furthermore, the application determines, whether the instructions comprise answers to the question and, if answers are included in the instructions, the application controls the display unit to present the answers for selection by the user. In one embodiment, the question and possible answers are displayed at the display unit once the application has received and interpreted the instructions sent from the broker server 108. Likewise, it may be possible to include in the instructions a point in time for presenting the questions and possible answers. Such information is recognized by the application, and the application presents the question and possible answers once the specified point in time has been reached. For determining this point in time, the application may access a time signal provided by a clock unit included in the mobile communication device 101.

Preferably, for presenting the question and possible answers, the application uses functionalities provided by the processor unit 107 of the mobile communication device 101 for displaying text, menus and the like. These functionalities may be provided within a graphical environment, which may be provided by an operating system of the mobile communication device 101. The functionalities may be accessed by means of commands, which are implemented in the application. For receiving the answer of the user, the application instructs the mobile communication device 101 to pass a user input made in connection with the presentation of the question to the application. In case the application is executed in the identification module 105, it uses CAT commands for presenting the question and the answers. In particular, proactive commands are used for this purpose. Examples of commands for controlling the presentation of the question and the answers are the GET INKEY and GET INPUT commands specified in TS 102 223. These commands instruct the processor unit 107 to display text and/or icons and to pass a user input made in connection with the text and/or icon transparently to the identification module 105. Further examples of usable commands are the SELECT ITEM command by means of which a list can be presented from which the user can choose an item corresponding to his answer. Further commands, such as the LAUNCH BROWSER command or a MENU command may also be used. For displaying the question and the answers in elements, such as text fields and menus, the processor unit 107 preferably uses a standard graphical representation provided by the mobile communication device 101, which is also used to display similar graphical elements in the normal operation of the mobile communication device 101. Thus, the presentation of the question and possible answers is integrated into the usual "look and feel" of the mobile communication device 101. This leads to a seamless experience for the user of the mobile communication device 101.

When the question is displayed at the mobile communication device 101, the user has the possibility to enter his answer to the question at the user interface 106 of the mobile communication device 101. This may be done by selecting one of the answers provided using the input unit of the user interface 106. If no answers are provided, the user may input a text string corresponding to an answer of his choice. The input of the user made in connection with the presentation of the question is passed to the application as described before.

When the application has received the user input, it generates a message comprising the user input or the answer of the user. If the user has selected his answer from a several predetermined answers, the application may include into the message an identifier allowing the application server 102 to determine the answer of the user. After having generated the message, the application instructs the mobile communication device 101 to send the message to the broker server 108 via the radio module 104 and the mobile communication network 103. The address of the broker server 108 used for addressing the message may be stored in the application or it may be given in the instructions received from the broker server 108. The message may be sent as an SMS message or it may be transmitted via an IP connection between the mobile communication device 101 and the broker server 108, for example. Moreover, the message is preferably transparently sent to the broker server 108 without a user interaction. In particular, the message may be sent transparently to the broker server 108. For instructing the mobile communication device 101 to send an SMS message, the application may use the CAT command SEND SHORT MESSAGE, if the application is executed in the identification module 105.

When the broker server 108 receives the message comprising the answer from the mobile communication device 101, it determines the application server 102 to which the answer is to be forwarded. This is the application server 102 that sent the question to the broker server 108. Preferably, information identifying the application server 102 is included in the instruction, which the broker server 108 sends to the mobile communication device 101. The information is recognized by the application in the mobile communication device 101 and included in the message that comprises the answer of the user and that is sent to the broker server 108. The broker server 108 uses the information to determine the application server 102 to which the answer of the user is to be forwarded. Then, the answer is passed to the determined application server 102.

Preferably, the mobile communication device 101 is identified, when the answer is forwarded to the application server 102. This may be done in the same way as described before in connection with the service request using the sender address or an identification code allocated to the mobile communication device 101. However, if the broker server 108 generated a temporary identification code when forwarding the service request, the same identification code is preferably used for forwarding the answer and no new identification code is generated.

When the application server 102 receives the answer given by the user of the mobile communication device 101, it processes the answer within the scope of the service provided by the application server 102. In particular, the application server 102 may execute an action on behalf of the user of the mobile communication device 101 in accordance with the answer to the question. As described before, the question may query a confirmation for the execution of certain action. Here, the application server 102 may execute the action, if the user has confirmed it, and the application server 102 may not execute the action, when the user has not confirmed it. In case the user has selected one of a plurality of several options for executing a service by means of his answer, the application server 102 may execute the service in accordance with the option selected by the user.

In a further embodiment, the application server 102 may provide to the broker server 108 one or more further questions and each further question may be allocated to one answer to the first question. The further questions may be provided to the broker server 108 together with the first question. When the broker server 108 receives an answer to the first question, it determines whether a further question is allocated to the received answer. If this is the case, the broker server 108 sends the-allocated further question to the mobile communication device 101. The further question is processed in the same way as the first question. Particularly, this means that the question is presented at the mobile communication device 101 and the answer given by the user is send to the broker server 108 in a way described before. After having received the answer to the further question from the mobile communication device 101, the broker server 101 transmits the answer to the first question and the answer to the second question to the application server 102 as described before. This embodiment advantageously allows for asking to the user of the mobile communication device 101 conditional questions in an easy way. In particular, the application server 102 does not have to be involved for determining the further question.

Furthermore, it is also possible that the application server 102 transmits a batch of questions to the broker server 108, which are provided to the user of the mobile communication device 101 independent of a predetermined condition. The questions in the batch may be successively sent from the broker server 108 to the mobile communication device 102. This means that the broker server 108 sends a question after having received an answer to the foregoing question. Preferably, the broker server 108 stores the answers until having received the answer to the last question. Then, the broker server 108 may send the answers to the application server 102. As an alternative, the broker server 108 may send the batch of questions to the mobile communication device 101 and the application may present the questions and possible answers successively to the user. This means that the application presents one question and a possible answer after having received a user input relating to the forgoing question. After having received the answers to all questions of the batch, the answers may be transmitted to the broker server 108 and the broker server 108 may send the answers to the application server 102.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word 'comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage.

Any reference signs in the claims should not be construed as limiting the scope.

## Claims

1. A method for providing a question to a user of a mobile communication device (101) connected to a mobile communication network (103), comprising the steps of:
- receiving a command in the mobile communication device (101) via the mobile communication network (103), the command specifying a question to be presented to the user of the mobile communication device (101),
- passing the command to an application of the mobile communication device (101), the application controlling the mobile communication device (101) to present the question to the user within a standard graphical environment provided by the mobile communication device (101),
- the application receiving a user input made at the mobile communication device (101) in connection with the presentation of the question, and
- the application instructing the mobile communication device (101) to the send an answer to the question via the mobile communication network (103), the answer corresponding to the user input.

2. The method according to one of the preceding claims, wherein the application is executed in a user identification module removably connected to the mobile communication device (101).

3. The method according to one of the preceding claims, wherein the application uses a card application toolkit, particularly a SIM application toolkit or a USIM application toolkit, for controlling the mobile communication device (101).

4. The method according to one of the preceding claims, wherein the command and/or the answer is sent via the mobile communication network (103) using a messaging service provided by the mobile communication network (103), particularly using a Short Message Service.

5. The method according to one of the preceding claims, wherein the command specifies at least two predetermined answers to the questions, the application presenting the predetermined answer in the graphical environment and the application interpreting the input of the user as a selection of one predetermined answer.

6. The method according to one of the preceding claims, wherein an application unit (102) transmits an instruction including the question to a broker unit (108) with the mobile communication network (103), the broker generating the command and transmitting the command to the mobile communication device (101) via the mobile communication network (103).

7. The method according to one of the preceding claims, wherein the application controls the mobile communication device (101) to send a message comprising the answer to the broker unit (108), the broker unit (108) forwarding the answer to the application unit (102).

8. The method according to one of the preceding claims, wherein the instruction comprises an address of the mobile communication device (101), the broker unit (108) using the address for addressing the command to the mobile communication device (101) or wherein the instruction comprises an identification code of the mobile communication device (101), the broker unit (108) determining an address of the mobile communication device (101) using an allocation between the identification code and the address, the determined address being used for addressing the command to the mobile communication device (101).

9. The method according to one of the preceding claims, wherein the broker unit (108) determines an identification code allocated to the mobile communication device (101) and forwards the answer to the application unit (102) together with the identification code.

10. A computer program for being executed in a mobile communication device (101) connected to a mobile communication network (103), the computer program being adapted to receive a command, the command specifying a question to be presented to the user of the mobile communication device (101), the computer program being further configured to control the mobile communication device (101) to present the question to the user within a standard graphical environment provided by the mobile communication device (101), to receive a user input made at the mobile communication device (101) in connection with the presentation of the question, and to instruct the mobile communication device (101) to the send an answer to the question via the mobile communication network (103), the answer corresponding to the user input.

11. An identification module (105) for use in a mobile communication device (101) comprising a computer program according to claim 11.

12. The identification module (105) according to claim 12, wherein the computer program is adapted to use a card application toolkit, particularly a SIM application toolkit or a USIM application toolkit, for controlling the mobile communication device (101).

13. A mobile communication device (101) comprising a computer program according to claim 11 and/or an identification module (105) according to claim 12 or 13.

14. A broker unit (108) for providing a question to a user of a mobile communication device (101) connected to a mobile communication network (103), the broker unit (108) being connectable to the mobile communication network and the broker unit (108) being adapted to generate and to transmit to the mobile communication device (101) a command for instructing an application of the mobile communication device (101) to present the question to the user, and the broker unit (108) being further adapted to receive from the mobile communication device (101) an answer to the question, the broker unit (108) being further adapted to generate the command in response to an instruction sent from an application unit (102) to the broker unit (108).

15. A method for providing a question to a user of a mobile communication device (101) connected to a mobile communication network (103), comprising the steps of:
- connecting a broker unit (108) to a mobile communication network,
- receiving in the broker unit (108) an instruction from an application unit (102), the instruction specifying a question,
- in response to a receipt of the command, generating in the broker unit (108) a command for-instructing an application of the mobile communication device (101) to present the question to the user,
- sending the command from the broker unit (108) to the mobile communication device (101), and
- receiving in the broker unit (108) an answer to the question from the mobile communication device (101).
